# EUROPÄISCHE PATENTSCHRIFT

(11) **EP 1 088 724 B1**
(45) Veröffentlichungstag und Bekanntmachung des Hinweises auf die Patenterteilung: **12.05.2010**
(21) Anmeldenummer: 00118065.2
(22) Anmeldetag: 23.08.2000
(51) Int. Cl.: B60T 8/00

(54) **Verfahren zur Bremseingriffsregelung und Steuereinrichtung**
Brake actuating regulation procedure and control arrangement
Procédé d'actionnement de la régulation de freinage et installation de commande

(30) Priorität: 28.09.1999 DE 19946463
(43) Veröffentlichungstag der Anmeldung: 04.04.2001
(73) Patentinhaber: Bayerische Motoren Werke Aktiengesellschaft, 80809 München (DE)
(72) Erfinder: Fischer, Gerhard, 80992 München (DE)

(56) Entgegenhaltungen:
- EP-A- 0 321 894
- EP-A- 0 774 390
- DE-A- 19 704 954

## Beschreibung

Die Erfindung betrifft ein Verfahren zur Bremseingriffsregelung bei einem allradangetriebenen Fahrzeug gemäß dem Oberbegriff des Anspruchs 1.

Bremsregelsysteme sind allgemein bekannt und werden unter anderem zur Verbesserung der Fahrsicherheit und Fahrdynamik immer häufiger eingesetzt.

Bei Allradfahrzeugen ergibt sich ein besonderes Fahrdynamikproblem. Gerade im unwegsamen Gelände kann es vorkommen, daß einzelne oder mehrere Räder den Bodenkontakt mehr oder weniger stark verlieren. Dies kann dazu führen, daß an diesen Rädern ein erhöhter Radschlupf auftritt, was gerade bei extremen Bergauf- oder Bergabfahrten zu einer Verminderung der Traktion führt. Dies wiederum beeinträchtigt die Fahrsicherheit.

Bisherige Bremsregelsysteme haben dieses Problem dahingehend zu lösen versucht, daß ein Bremseingriff dann vorgenommen wurde, wenn an einem Rad ein erhöhter Schlupf festgestellt wird.

Aus der DE 197 04 954 A1 geht ein Verfahren hervor, bei dem durch Berücksichtigung von Radfederwegen die Genauigkeit bei der Bestimmung von Schlupf verbessert wird.

Zum weiteren technischen Hintergrund wird auf die EP 0 321 894 A2 und die EP 0 774 390 A2 verwiesen.

Diese Vorgehensweise ist jedoch insofern nachteilig, als bei einem erhöhten Schlupf bereits die Traktion, insbesondere bei einer Bergauf- oder einer Bergabfahrt, verringert ist, so daß der Bremseingriff oft zu spät kommt.

Aufgabe der Erfindung ist es, ein Verfahren eingangs genannter Art anzugeben, das bei allradangetriebenen Fahrzeugen und auch im Gelände im wesentlichen eine fortwährend optimale Traktion sicherstellt.

Diese Aufgabe wird durch die im Anspruch 1 angegebenen Merkmale verfahrensmäßig gelöst.

Ein grundlegender Gedanke der Erfindung liegt darin, daß die Radein- und -ausfederwege - nachfolgend allgemein als Radfederwege bezeichnet -, die Radaufstandskräfte oder von den vorgenannten Größen abgeleitete Größen, beispielsweise die entsprechenden Ausfeder- und Kraftraten, einen Aufschluß über die Bodenhaftung eines bestimmten Rades geben. Durch das Erfassen und Auswerten dieser Größen kann somit auf die Bodenhaftung eines einzelnen Rades oder die Entwicklung der Bodenhaftung geschlossen werden. Aus dieser Größe wiederum läßt sich auf einen zu erwartenden Schlupf schließen. Liegt der zu erwartende Schlupf über einem bestimmten Grenzwert, so kann bereits ein Bremseingriff erfolgen, selbst wenn der tatsächliche Schlupf an einem einzelnen Rad noch nicht eine kritische Größe überschritten hat. In diesem Fall stellt ein Bremseingriff vor oder gleichzeitig bei Erreichen einer kritischen Schlupfgröße an einem Rad eine kontinuierliche Traktion sicher, wodurch ein Sicherheitszugewinn erreicht ist.

Die Radfederwege oder die Radaufstandskräfte können beispielsweise mittels Sensoren ermittelt werden.

Vorzugsweise können auch aus den Radfederwegen die Radaufstandskräfte ermittelt werden. Sensoren für die Radfederwege sind in manchen Fahrzeugen bereits vorhanden, so daß deren Signale auf einfache Weise mitverwendet werden können. Liegen diese Signale bereits auf einem Fahrzeug-Datenbus und werden einer bereits vorhandenen Bremsregel-Steuereinrichtung zur Verfügung gestellt, so bedarf es keiner wesentlichen Hardwareänderung, um das erfindungsgemäße Verfahren umzusetzen. Dies führt zu einer besonders kostengünstigen Realisierung des erfindungsgemäßen Verfahrens.

Um auf die Entwicklung des Schlupfes bzw. die Bodenhaftung eines einzelnen Rades schließen zu können, sind insbesondere die Ein- und Ausfederraten oder auch die zeitlichen Änderungen der Radaufstandskräfte interessant. Diese Größen können aus den Radfederwegen bzw. aus den Radaufstandskräften ohne weiteres ermittelt werden. Zusätzlich können der Steuereinrichtung Eingangsgrößen, die eine Bergauf- oder Bergabfahrt angeben, oder Eingangsgrößen, die eine Querbeschleunigung des Fahrzeugs angeben, zugeführt werden. Bei Berücksichtigung dieser Größen kann ein bestimmter Bremseingriff je nach Fahrsituation festgelegt werden. Dabei unterscheiden sich die Eingriffe bei Bergauf- oder Bergabfahrten gegenüber denjenigen bei Kurvenfahrten, Kreisfahrten oder Slalomfahrten. Bei einer Kreisfahrt oder einer Slalomfahrt ist es möglich, daß die beiden Räder einer Fahrzeugseite abheben, wogegen bei einer Bergauf- oder einer Bergabfahrt entweder ein einzelnes Rad oder diagonal angeordnete Räder den Bodenkontakt mehr oder weniger verlieren können. Entsprechend der Fahrsituation und den übrigen Eingangsinformationen, wie Lenkwinkel etc., können Bremsregelstrategien definiert und im Steuergerät abgelegt sein.

Ein konkretes Ausführungsbeispiel der Erfindung wird mit Bezug auf die beiliegenden Zeichnungen näher erläutert. Die Zeichnungen zeigen in:
- Fig. 1: eine schematische Darstellung einer antriebsverbundenen Vorder- und Hinterachse eines Geländefahrzeugs in Draufsicht,
- Fig. 2: eine schematische Darstellung wie Fig. 1, jedoch in Fahrtrichtung,
- Fig. 3a) bis 3c): schematische Darstellungen von Rädern mit verschiedenen Radausfederwegen,
- Fig. 4: ein Blockdiagramm einer Schaltskizze einer Ausführungsform eines erfindungsgemäßen Steuersystems und
- Fig. 5: eine schematische Darstellung einer antriebsverbundenen Vorder- und Hinderachse eines Geländefahrzeugs bei einer beschleunigten Kurvenfahrt.

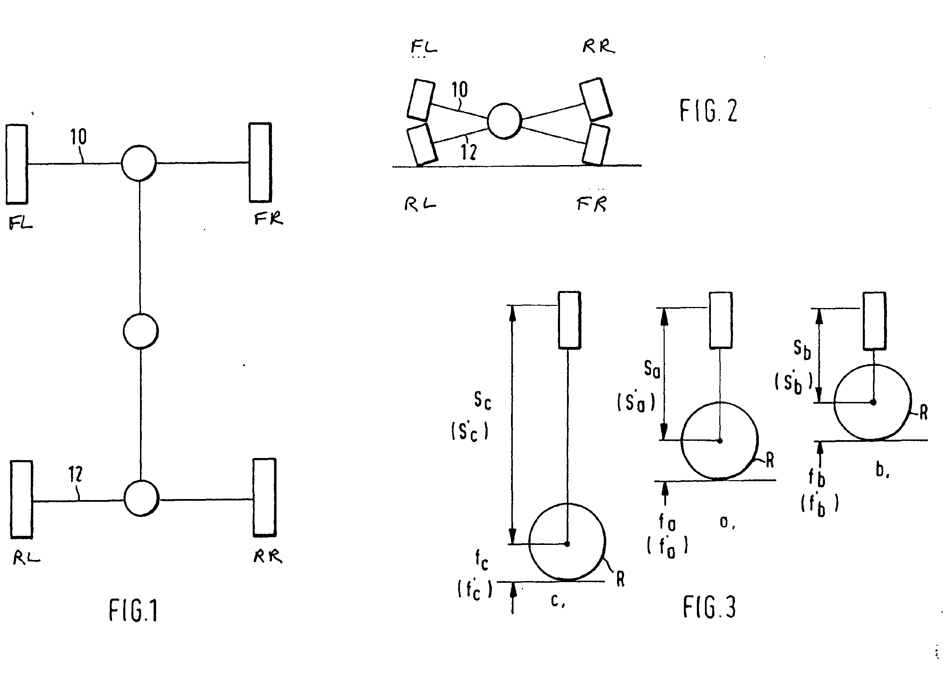

In Fig. 1 ist eine schematische Darstellung einer antriebsverbundenen Vorder- 10 und Hinterachse 12 mit den vorderen Rädern VL (= vorne links) und VR (= vorne rechts) und den hinteren Rädern HL (= hinten links) und HR (= hinten rechts) gezeigt. Je nach Bodenbeschaffenheit, z.B. bei Geländefahrten, kann nun die Vorderachse 10 oder/und die Hinterachse 12 verschränkt sein. Dabei sind je nach Verschränkung die Vorderräder oder/und die Hinterräder mehr oder weniger stark ein- bzw. ausgefedert.

In Fig. 2 ist eine schematische Darstellung der antriebsverbundenen Vorder- 10 und Hinterachse 12 eines Geländefahrzeugs gem. Fig. 1 in Fahrtrichtung gezeigt, wobei sowohl die Vorder- 10 als auch die Hinterachse 12 verschränkt sind (diagonale Verschränkung). Dabei sind die Räder VR und HL ausgefedert. Die Räder VL und VR sind eingefedert.

Gerade bei einer diagonalen Verschränkung im Gelände bei Bergauf- oder Bergabfahrten kann es zu einem Traktionsverlust kommen, der je nach Bodenbeschaffenheit und Steigung sicherheitskritisch sein kann. Einem solchen Traktionsverlust gilt es vorzubeugen.

Die Federwege werden in an sich bekannter Weise mittels eines Federwegsensors an den einzelnen Rädern erfaßt. In den Fig. 3a) bis 3c) sind für ein Rad R verschiedene Radfederwege sₐ, s_{b}, s_{c} dargestellt, wobei sₐ die Nulllage bedeutet, s_{b} ein eingefedertes Rad und s_{c} ein ausgefedertes Rad beschreibt. Aus den Radfederwegen kann man weiter die Federraten ṡₐ, ṡ_{b}, ṡ_{c}, die Radaufstandskräfte fₐ, f_{b}, f_{c} (über f = k * sᵢ) und die Radaufstandskraftraten ḟₐ, ḟ_{b}, ḟ_{c} (über f = k * s) berechnen, wobei k für eine Federkonstante steht.

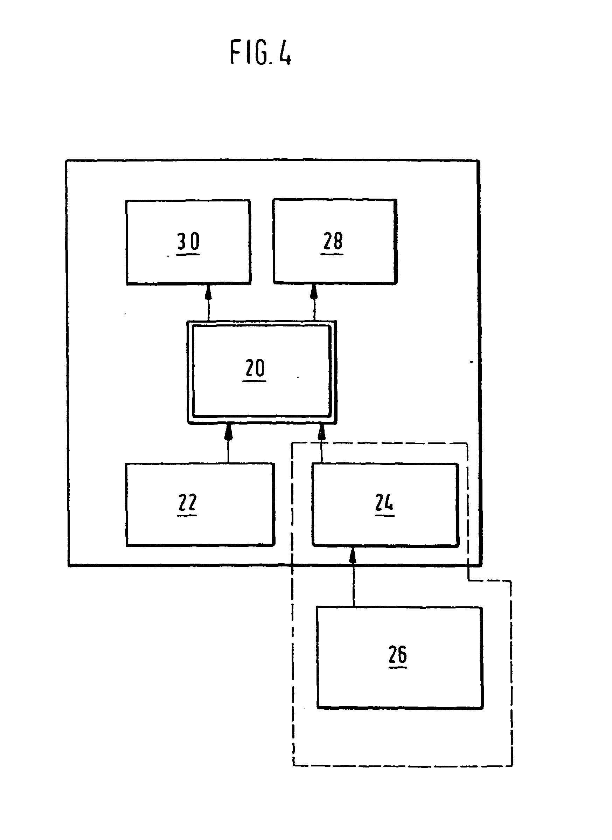

Alle diese Informationen stellen Informationen dar, auf deren Basis der Bremsregeleingriff zusätzlich beeinflußt werden kann. Der Bremsregeleingriff für die Bremse eines jeden Rades wird (siehe Fig. 4) in einem Brems-Steuergerät 20 bestimmt. Vorliegend wird ein DSC-Steuergerät verwendet, wobei DSC als Abkürzung für Dynamische Stabilitäts-Kontrolle steht. Bisher werden diesem Brems-Steuergerät 20 verschiedene Eingangsgrößen, wie der Lenkwinkel, der Bremsdruck, die Drehrate, die Radgeschwindigkeit, etc. zur Verfügung gestellt. Diese Größen werden zumeist von Sensoren (Bezugsziffer 22) direkt ermittelt und an das Brems-Steuergerät 20 weitergeleitet.

Zusätzlich zu den Signalen von diesen Sensoren 22 werden dem BremsSteuergerät 20 nunmehr noch die Radfederwege sᵢ, die Radfederwegraten ṡᵢ, die Radaufstandskräfte fᵢ und die Radaufstandskraftraten ḟᵢ (wobei jeweils i = 1-4)) als Eingangsgrößen zur Verfügung gestellt. Diese Informationen werden in oben beschriebener Weise in einer Signalaufbereitungseinheit 24 aus den Radfederwegen sᵢ (i = 1, 2, 3, 4) gewonnen. Die Radfederwege sᵢ wiederum stammen von Sensoren 26 an den einzelnen Rädern VL, VR, HL, HR.

Aus den dem Brems-Steuergerät 20 vorliegenden Eingangsinformationen bestimmt dieses nicht nur ein Soll-Motormoment und beeinflußt eine Motorsteuerung 28, sondern bestimmt auch die Bremsdrücke für die einzelnen Radbremsen Mb1 - Mb4, die dann an den einzelnen Radbremsen 30 realisiert werden. Die Radbremsen werden entsprechend den einzelnen berechneten Radbremsdrücken individuell angesteuert und tragen zu einer verbesserten Traktion, insbesondere bei einer Bergauf- und einer Bergabfahrt, bei.

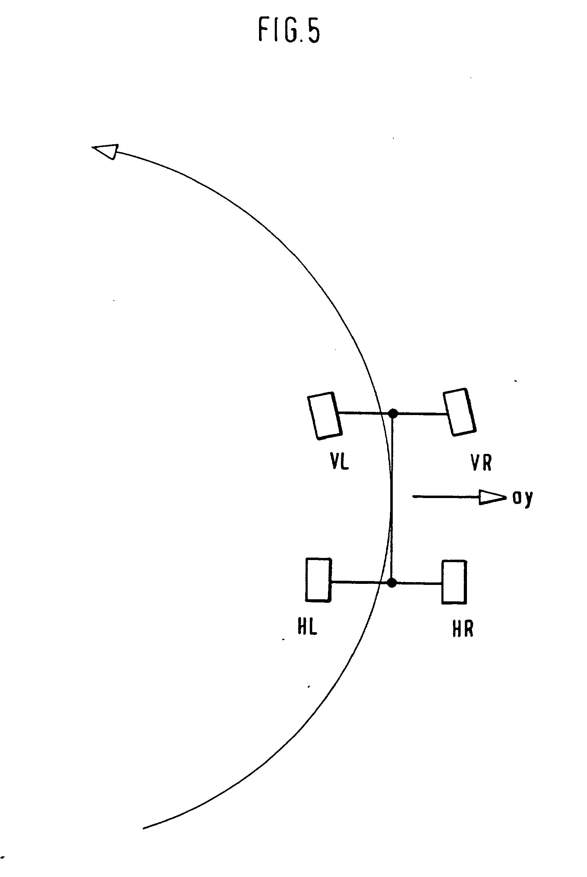

Aber nicht nur bei Bergauf- und Bergabfahrten kann die Traktion verbessert werden, sondern auch bei Kurven- oder Slalomfahrten. In Fig. 5 ist in schematischer Weise die Durchfahrung einer Kurve dargestellt, wobei eine Kreisbeschleunigung ay nach außen wirkt. Dadurch werden die kurveninneren Räder entlastet, so daß es an diesen Rädern zu einem Ausfedern kommt. Gleichzeitig werden die kurvenäußeren Räder belastet, so daß es an diesen Rädern zu einem Einfedern kommt. Ab einer bestimmten von verschiedenen Faktoren abhängenden Kurvengeschwindigkeit kann es zu einem Abheben der kurveninneren Räder von der Fahrbahn kommen. Um dies zu verhindern, kann ein Motor- oder Bremseingriff auf der Basis der von den Radsensoren gemeldeten Federwege durchgeführt werden.

Insgesamt sind mit der Information aus den Radfederwegen und deren zeitlichen Änderungen bzw. den Radaufstandkräften und deren zeitlichen Änderungen zusätzliche Regelstrategien innerhalb der Bremsregelung möglich. D.h. die Bremsmomentenregelung und Antriebsmomentenregelung können unabhängig von konventionellen Größen, wie Radschlupf, Querbeschleunigung, Drehrate und Lenkwinkel, ausgeführt werden. Dies ergibt eine Verbesserung der Traktion durch eine präventive Bremsmomentenregelung und eine Verbesserung der Stabilität und Kippverhinderung bei Kreisfahrten und Spurwechselmanövern. Auch kann eine Verbesserung der Motorbremsmomente durch einen gezielten Bremseneingriff der abhebenden Rädern bei Bergabfahrt erreicht werden.

Zudem kann man durch eine Auswertung der Federwegfrequenz die Oberflächenbeschaffenheit der Fahrbahn feststellen und klassifizieren (z.B. Schotter oder Schlechtweg). Mit diesen Informationen lassen sich die konventionellen ABS/ASC-Schlupfschwellen entsprechend erhöhen und somit auf den spezifischen Fahrbahnen höhere Bremsleistungen bzw. höhere Traktionsteistungen erzielen.

## Patentansprüche

1. Verfahren zur Bremseingriffsregelung bei einem allradangetriebenen Fahrzeug mit einem Bremsregelsystem umfassend eine Steuereinrichtung sowie den einzelnen Rädern zugeordnete und unabhängig voneinander beaufschlagbare Bremsen, wobei die Steuereinrichtung in Abhängigkeit von Eingangsinformationen Signale zur Ansteuerung der einzelnen Bremsen erzeugt,
**dadurch gekennzeichnet,**
**daß** zumindest die Radfederwege an den einzelnen Rädern erfaßt und aus den Radfederwegen oder davon abgeleiteten Größen Radsignale erzeugt werden,
**daß** die Radsignale der Steuereinrichtung zugeführt werden, die daraus auf einen an den einzelnen Rädern zu erwartenden Schlupf schließt und
**daß** bei Vorliegen eines zu erwartenden Schlupfes über einem bestimmten Grenzwert die Signale zur Ansteuerung der Bremsen an den einzelnen Rädern zumindest in Abhängigkeit von den als Eingangsinformationen vorliegenden, einzelnen Radsignalen generiert werden, wobei eine verringerte Radaufstandskraft an einem Rad durch einen Bremseingriff derart ausgeglichen wird, daß ein Schlupf dieses Rades im wesentlichen verhindert wird.

2. Verfahren nach Anspruch 1,
**dadurch gekennzeichnet,**
**daß** aus den Radfederwegen die Radaufstandskräfte ermittelt werden.

3. Verfahren nach einem der vorhergehenden Ansprüche,
**dadurch gekennzeichnet,**
**daß** aus den zeitlichen Veränderungen der Radfederwege Ein- und Ausfederraten oder aus der zeitlichen Änderung der Radaufstandskräfte Radaufstandskraftraten ermittelt und zumindest eine dieser Größen als Radsignal verwendet werden.

4. Verfahren nach einem der vorhergehenden Ansprüche,
**dadurch gekennzeichnet,**
**daß** der Steuereinrichtung als zusätzliche Eingangsgrößen Signale zugeführt werden, die eine Bergauf- oder Bergabfahrt angeben.

5. Verfahren nach Anspruch 4,
**dadurch gekennzeichnet,**
**daß** die die Bergauf- oder Bergabfahrt beschreibenden Signale auch Informationen über die Steigung einer befahrenen Fläche enthalten.

6. Verfahren nach einem der vorhergehenden Ansprüche,
**dadurch gekennzeichnet,**
**daß** der Steuereinrichtung als zusätzliche Eingangsgrößen Signale zugeführt werden, welche die Größe einer Querbeschleunigung des Fahrzeugs angeben.

## Claims

1. A method for automatic brake intervention control in an all-wheel-drive vehicle with an automatic brake control system comprising a control device and brakes which are associated with the individual wheels and can be actuated independently of one another, wherein the control device generates signals to activate the individual brakes as a function of input information, **characterised in that** at least the wheel suspension travels at the individual wheels are detected and wheel signals are generated from the wheel suspension travels or variables derived therefrom, **in that** the wheel signals are supplied to the control device, which infers therefrom a slip to be expected at the individual wheels and **in that** when a slip to be expected above a specific limit value is present, the signals are generated to activate the brakes at the individual wheels at least as a function of the individual wheel signals present as input information, a reduced wheel contact force at a wheel being compensated by a brake intervention in such a way that a slip of this wheel is substantially prevented.

2. A method according to claim 1, **characterised in that** the wheel contact forces are determined from the wheel suspension travels.

3. A method according to any one of the preceding claims, **characterised in that** compression and rebounding rates are determined from the time changes in the wheel suspension travels or wheel contact force rates are determined from the time change in the wheel contact forces and at least one of these variables is used as the wheel signal.

4. A method according to any one of the preceding claims, **characterised in that** signals which indicate an uphill or downhill drive are supplied to the control device as additional input variables.

5. A method according to claim 4, **characterised in that** the signals describing the uphill or downhill drive also contain information about the gradient of a surface being travelled.

6. A method according to any one of the preceding claims, **characterised in that** signals which indicate the size of a lateral acceleration of the vehicle are supplied to the control device as additional input variables.

## Revendications

1. Procédé de régulation de freinage d'un véhicule dont toutes les roues sont motrices à l'aide d'un système de régulation de frein comprenant une installation de commande ainsi que les freins associés aux différentes roues et se commandant indépendamment l'un de l'autre, l'installation de commande générant des signaux de commande des différents freins en fonction d'informations d'entrée,
**caractérisé en ce qu'**
on saisit au moins la course de suspension des différentes roues et à partir de ces courses ou de grandeurs déduites de celles-ci, on génère des signaux de roue,
on fournit les signaux de roue à l'installation de commande qui en déduit le patinage prévisible des différentes roues, et
en cas de patinage prévisible dépassant une certaine valeur limite, les signaux de commande des freins des différentes roues sont générés au moins en fonction des différents signaux de roue disponibles comme informations d'entrée, et on compense une force d'appui réduite d'une roue par une action sur les freins de façon à éviter pratiquement le patinage de cette roue.

2. Procédé selon la revendication 1,
**caractérisé en ce qu'**
à partir des courses de suspension de roue, on détermine les forces d'appui de roue.

3. Procédé selon l'une des revendications précédentes,
**caractérisé en ce qu'**
à partir des variations en fonction du temps des courses de suspension des roues, on détermine des coefficients de débattement rentrant et sortant des freins ou à partir de la variation en fonction du temps des forces d'appui de roue, on détermine des coefficients de force d'appui de roue et on utilise au moins l'une de ces grandeurs comme signal de roue.

4. Procédé selon l'une des revendications précédentes,
**caractérisé en ce qu'**
on fournit à l'installation de commande, des grandeurs d'entrée supplémentaires sous la forme de signaux indiquant une montée ou une descente.

5. Procédé selon la revendication 4,
**caractérisé en ce que**
les signaux décrivant une montée ou une descente, contiennent également des informations relatives à la pente d'une surface sur laquelle on peut rouler.

6. Procédé selon l'une des revendications précédentes,
**caractérisé en ce que**
l'installation de commande reçoit comme grandeurs d'entrée supplémentaires, des signaux indiquant l'amplitude d'une accélération transversale du véhicule.
